# EUROPEAN PATENT SPECIFICATION

(11) **EP 0 810 059 B1**
(45) Date of publication and mention of the grant of the patent: **10.04.2002**
(21) Application number: 97108130.2
(22) Date of filing: 20.05.1997
(51) Int. Cl.: B23P 15/40, B29B 9/06

(54) **Cutter knife for thermoplastic resin pelletizer and production method of said cutter knife**
Messer für Granulator von thermoplastischen Kunststoffen und Verfahren zu dessen Herstellung
Lame coupeuse pour un granulateur de matière de résine thermoplastique et procédé de fabrication

(30) Priority: 30.05.1996 JP 15905896
(43) Date of publication of application: 03.12.1997
(73) Proprietor: Kakoh kiki Company Limited, Tokyo (JP)
(72) Inventor: Sakai, Tadashi, Musashino-shi, Tokyo (JP)
(74) Representative: Sperling, Rüdiger, Dipl.-Ing.

(56) References cited:
- EP-A- 0 757 933
- US-A- 4 090 674
- US-A- 4 759 248
- US-A- 4 930 710
- US-A- 5 191 819
- "Composite increase knife life" MACHINE DESIGN, vol. 63, no. 11, July 1991, CLEVELAND, OHIO,US , page 46 XP000192238
- PATENT ABSTRACTS OF JAPAN vol. 008, no. 191 (M-322), 4 September 1984 -& JP 59 083606 A (NIPPON SEIKOSHO KK), 15 May 1984,
- PATENT ABSTRACTS OF JAPAN vol. 005, no. 123 (M-082), 8 August 1981 -& JP 56 062735 A (TAKAYASU KIYOTERU;OTHERS: 03), 28 May 1981,

## Description

The invention relates to a production method of a cutter knife to be mounted on a thermoplastic resin pelletizer for pelletizing thermoplastic resin.

For the sake of convenience of transportation, reducing costs of later processing and other reasons, thermoplastic resin is normally produced and distributed in the form of pellets, which are small, approximately rice-grain sized particles. These pellets are industrially produced by means of a kneading-pelletizing (extrusion) machine incorporated in a chemical apparatus. Examples of types of a pelletizing device used in such a pelletizer include a hot cut type and a underwater cut type. There are also various blades used for this purpose; a typical example of fixed blades is a die plate, while there is a cutter knife 1 shown in Fig. 8 as an example of movable blades. Nowadays, because of their superior abrasion resistance and resin cutting capability, ceramic alloys are most widely used as a material of cutter knife 1.

US-A-4 090 674 describes a cutter knife to be mounted on a thermoplastic resin pelletizer for pelletizing thermoplastic resin, wherein the main body of said cutter is formed out of steel, the knife edge of said cutter knife being formed out of a ceramic alloy as an integral body with said main body.

However, ceramic alloys used as a material of such a cutter knife present various problems; not only are they expensive and hard to acquire but also prone to being chipped or broken because they have lower resistance to a transverse load, in other words are more fragile, compared with steel which is the most typical blade material. Although ceramic alloys require a thorough countermeasure to solve the above problems, it cannot be said that a sufficiently effective countermeasure exists at present. Furthermore, a ceramic alloy is difficult to process by using machine, which means that processing a ceramic alloy is costly. Therefore, using a ceramic alloy, which is itself an expensive material, to produce cutter knives substantially increases their costs.

In order to solve the above problems presented by conventional cutter knives, an object of the invention is to provide a production method by using a ceramic alloy as a material for said cutter knife, wherein said cutter knife can easily be produced with reduced costs and without the danger of breakage in spite of using a ceramic alloy as a material.

According to the invention, a steel block is so shaped as to have a step when viewed from the side and, after having a ceramic alloy plate bonded to the upper surface of the lower step thereof by means of diffusion bonding, is diagonally cut at specified intervals, and then, each cut piece is cut into a specified shape.

### DESCRIPTION OF PREFERRED EMBODIMENTS:

Next, embodiments of the present invention are explained in detail hereunder referring to the drawings.

Numeral 11 denotes a cutter knife used as a movable blade of a thermoplastic resin pelletizer 20. Cutter knife 11 comprises a main body 12 made of steel and a knife edge 13 which is formed out of a ceramic alloy as an integral body with main body 12.

Although the ceramic alloy used for the present embodiment is a titanium carbide (TiC)-type alloy, it is to be understood that ceramic alloys applicable for the present invention are not limited to a TiC alloy.

### Embodiments:

A steel block serving as the material of main body 12 is so shaped as to have a step when viewed from the side, and then, after bonding a ceramic alloy plate that constitutes knife edge 13 to the upper surface of the lower step by means of diffusion bonding, is diagonally cut at specified intervals (see Figs. 1 and 2). Then, by cutting the material into a specified shape by a method known to those skilled in the art, cutter knife 11 is formed (see Fig. 3).

### EFFECT OF INVENTION:

As described above, the present invention substantially improves breakage resistance of a cutter knife to be mounted on a thermoplastic resin pelletizer for pelletizing thermoplastic resin by integrally forming the main body and the knife edge of the cutter knife out of steel and ceramic alloy respectively. Further, the invention is capable of reducing costs of material by forming the main body out of steel, as well as considerably reducing production costs of cutter knives by simplifying their production method.

### BRIEF DESCRIPTION OF DRAWINGS:

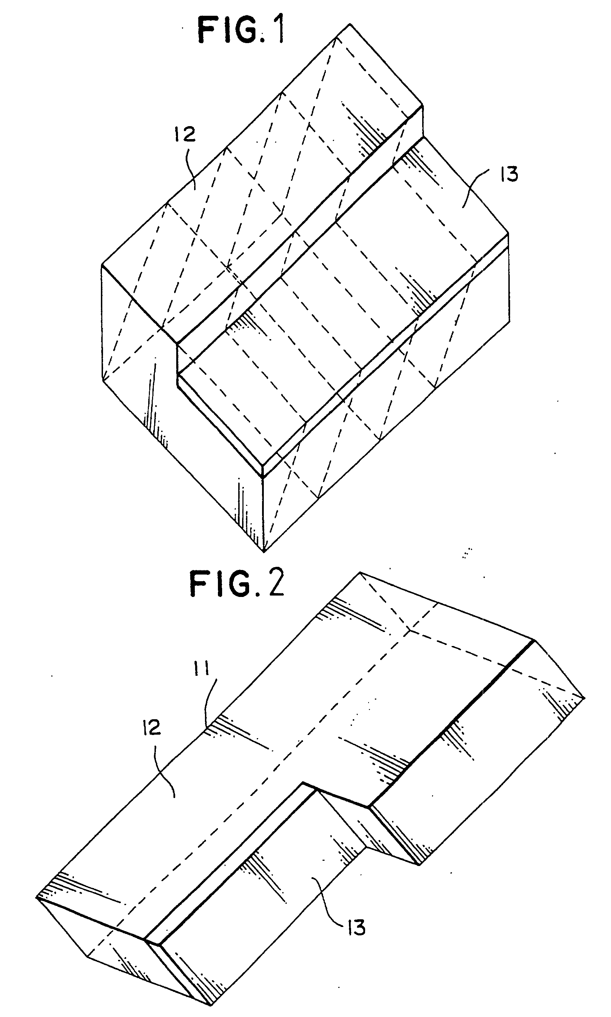

Fig. 1 is a perspective view to explain a method of processing a cutter knife according to the invention, illustrating the state where a ceramic alloy plate is bonded by means of diffusion bonding.
Fig. 2 is a perspective view of same illustrating a cut piece.

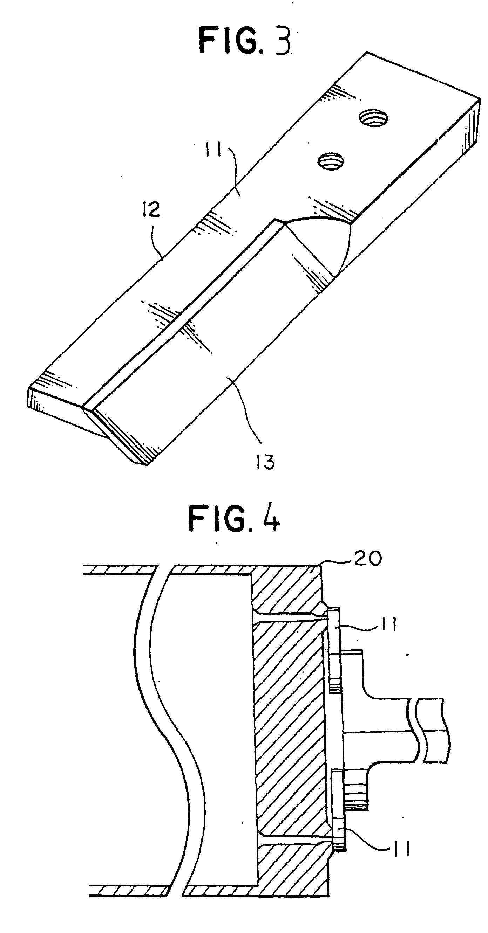

Fig. 3 is a perspective view of same after the cutting processing.
Fig. 4 is a schematic side view illustrating the relationship between a thermoplastic resin pelletizer and its cutter knives.

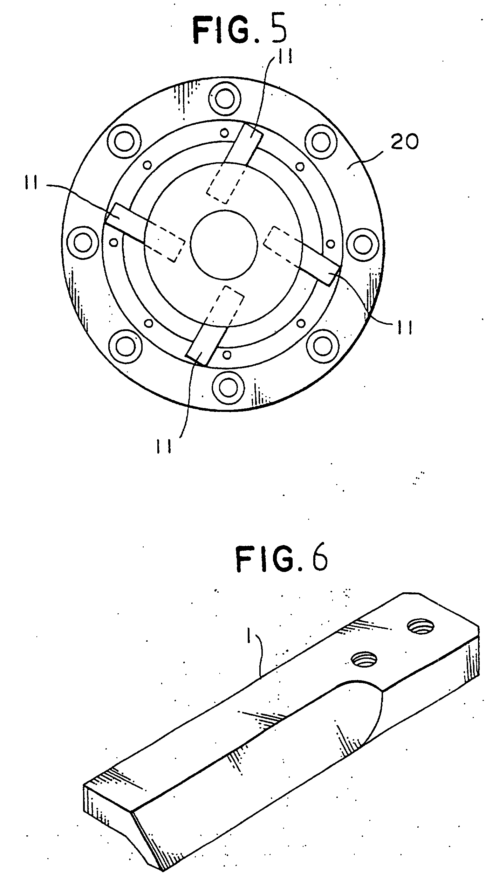

Fig. 5 is a front view of same.
Fig. 6 is a perspective view of a conventional cutter knife.

### Numeral Codes:

- 11: cutter knife
- 12: main body
- 13: knife edge
- 14: groove
- 20: thermoplastic resin pelletizer

## Claims

1. A method of producing a cutter knife (11) for a thermoplastic resin pelletizer, said method calling for forming a steel block (12) into such a shape as to have a step when viewed from the side; bonding a ceramic alloy plate (13) to the upper surface of the lower step of said steel block (12) by means of diffusion bonding; diagonally cutting said block (12) at specified intervals; and cutting each cut piece into a specified shape.

## Patentansprüche

1. Verfahren zur Herstellung eines Schneidmessers (11) für eine Pelletiervorrichtung für thermoplastisches Harz, welches Verfahren das Formen eines Stahlblocks (12) in eine Form, die von der Seite gesehen eine Stufe hat; das Verbinden einer Platte (13) aus keramischer Legierung mit der oberen Oberfläche der unteren Stufe des Stahlblocks (12) mittels Diffusionsbindung; das diagonale Schneiden des Blockes (12) in festgelegten Intervallen; und das Schneiden jedes abgeschnittenen Teiles in eine bestimmte Form umfaßt.

## Revendications

1. Une méthode pour produire une lame (11) destinée à un pelletiseur de résine thermoplastique, ladite méthode demandant qu'un bloc en acier (12) soit mis en forme de manière à présenter, vu latéralement, un gradin; adhésivage d'une plaque en alliage céramique (12) sur la face supérieure du gradin inférieur dudit bloc en acier (12) au moyen d'une liaison par diffusion; coupe en diagonale dudit bloc (12) selon des intervalles spécifiés; et coupe de chaque pièce selon une forme spécifiée.
